## Europäisches Patentamt

## European Patent Office

## Office européen des brevets

(19)

(11) Publication number: **0 132 645**
**A2**

(12) # EUROPEAN PATENT APPLICATION

(21) Application number: **84107797.7**

(22) Date of filing: **05.07.84**

(51) Int. Cl.⁴: **H 04 L 11/16**

(30) Priority: **28.07.83 US 518175**

(43) Date of publication of application:
**13.02.85 Bulletin 85/7**

(84) Designated Contracting States:
**DE FR GB**

(71) Applicant: **International Business Machines Corporation**
**Old Orchard Road**
**Armonk, N.Y. 10504(US)**

(72) Inventor: **Chang, Yuan**
**4072 N.W. 3rd Avenue**
**Boca-Raton, FL 33431(US)**

(74) Representative: **de Pena, Alain**
**Compagnie IBM France Département de Propriété**
**Industrielle**
**F-06610 La Gaude(FR)**

(54) **Method and apparatus for facilitating collision detection.**

(57) In multiple access bit-serial baseband data communication systems, transceiver stations "listen" for collisions while their transmitters are actively signalling on a common bus. Any station detecting collision it aborts its transmission and reschedules the same. In order to avoid erroneous collision detection the presently disclosed stations are made sensitive to collisions only while transmitting a particular binary level and insensitive at other times. When transmitting at the particular level, the station's driver is conditioned to present high impedance to the bus, so as not to interfere with reception of signals sent by other stations. Transitions to this high impedance state are delayed by a short increment of time, relative to corresponding transitions in the bit signals at the driver input, for allowing active/quick removal of charges accumulated at the local bus connection site during the previous bit transfer period. If all but one detect collision, those detecting collision will defer and the station not detecting collision will continue its transmission.

FIG. 4

0132645

## METHOD AND APPARATUS FOR FACILITATING
## COLLISION DETECTION

### Field of the Invention

This invention pertains to a method and apparatus for transmitting data in a multiple access collision sensing mode, which facilitates detection of collisions by contending transceivers. The disclosures in U.S. patents US-A-4,063,220 and US-A-4,259,663 are considered representative of the state of the art in this area.

### Background Art

In such systems, plural transceivers may begin sending information packets on a common medium (bus) when the bus appears to be idle. Each transceiver monitors the bus for "collision" (interference) by comparing received bits with locally transmitted bits. Upon sensing a collision, the systems "defer" (i.e. they immediately abort their transmissions and reschedule them; usually at relatively different times so as to reduce the likelihood of repeated collisions by the same contenders).

A problem encountered in such "concurrent" access configurations is that signals applied locally to the bus tend to "overpower" or obscure remote signals, making collision detection uncertain.

### Summary of the Invention

A principal object of the present invention is to avoid this problem.

Another object is to ensure reliable detection of collision in such systems by operating the station transceivers in a specifically disclosed manner.

A further object is to operate such transceivers in a manner which not only facilitates and simplifies collision detection, but also permits performance of that function in an ancillary mode by shared user equipment whose primary function is that of logically processing data.

A method of facilitating collision detection by contending transceivers in a multiple access data communication system, in which plural transceivers having tapped connections to a common bus may simultaneously attempt to transmit packets of digital information in a bit-serial baseband form, each packet comprising multiple bit signals representing logical 1 and 0 digital information, said method being characterized in that it comprises, at each site of connection between a transceiver and the bus :

isolating the transmitting section of the transceiver from the bus during intervals locally allotted to transfers of signal levels to the bus representing one particular logical information bit value;

actively coupling the same section to the bus during intervals allotted to transfers of the opposite logical bit signal level to the bus;

receivably sampling the bit signal level on said bus at approximately the midpoint in time of each interval locally allotted to transferring a bit from the transceiver to the bus; and

timing transitions of said transmitting section from the actively coupled state to the isolated state to occur later than corresponding transitions in the logical bit information presented to the input of the transmitting section but earlier than the next time allotted for receivably sampling the bus level, whereby charge conditions accumulated at said connection site ban be actively removed through the transmitting

3

0132645

section before that section is placed in said isolated state.

The invention also provides :

an apparatus for facilitating collision detection in a multiple access data communication system, in which plural transceiver stations may simultaneously begin to transmit baseband signals on a bus , monitor the bus for collision, and abort and deferrably reschedule transmissions upon detecting collision, said apparatus being characterized in that it comprises :

three-state driver circuit means in the transmitting section of a said station's transceiver for passing information bit signals from the station to the bus;

means for conditioning said driver circuit means to distinct first, second and third states to effect transfers of information bit signals from the station to the bus;

said conditioning means actively setting said driver circuit means steadily to said first state for actively transferring a signal at a first amplitude level to said bus, said signal having a first logical bit significance;

said conditioning means setting said driver circuit means transiently to said second state to actively transfer to said bus a second signal level, different from said first level, when initiating transmission from the station of bit information having second logical significance opposite to said first logical significance, after prior transmission of bit information having said first logical significance; said bus charging to and remaining at said second level when no other station driver is simultaneously operating in said first state; and

said conditioning means setting said driver circuit means to said third state for the remaining transmission of said bit information having said second logical significance; said driver circuit presenting a high impedance effectively isolating it from said bus while in said third state.

The foregoing and other objects, features, advantages and benefits of the present invention may now be more fully understood and appreciated by considering the following detailed description and claims.

## Brief Description of the Drawings

Figures 1 and 2 schematically illustrate an "environmental" multiple access network system in which the subject invention may be advantageously used.

Figures 3 and 4, respectively, illustrate frame formats and byte signalling formats used in the system of Figures 1 and 2 to transfer varied byte length frames (or packets) over the multiple access bus medium shown in Figures 1 and 2.

Figure 5 is a circuit schematic illustrating the transmitting section of a subject transceiver embodying the present invention.

Figure 6 is a truth table illustrating all possible states of operation of the circuit shown in Figure 5.

Figure 7 diagrams operations of the circuit shown in Figure 5 for transferring specific bit signals to the bus.

Figure 8 diagrams operations of the local system while the circuit of Figure 5 is being operated to transfer the first two bytes of a packet to the multiple access bus.

Figure 9 illustrates interfering byte transfers by local and remote systems which would cause the local system to recognize a collision and abort its packet transfer.

Figure 10 illustrates interfering byte transfers which would affect neither the local system nor the reception integrity of the packet transferred by that system, but would give rise to collision detection and deferral operations at any interfering (remote) system(s).

## Detailed Description of the Invention

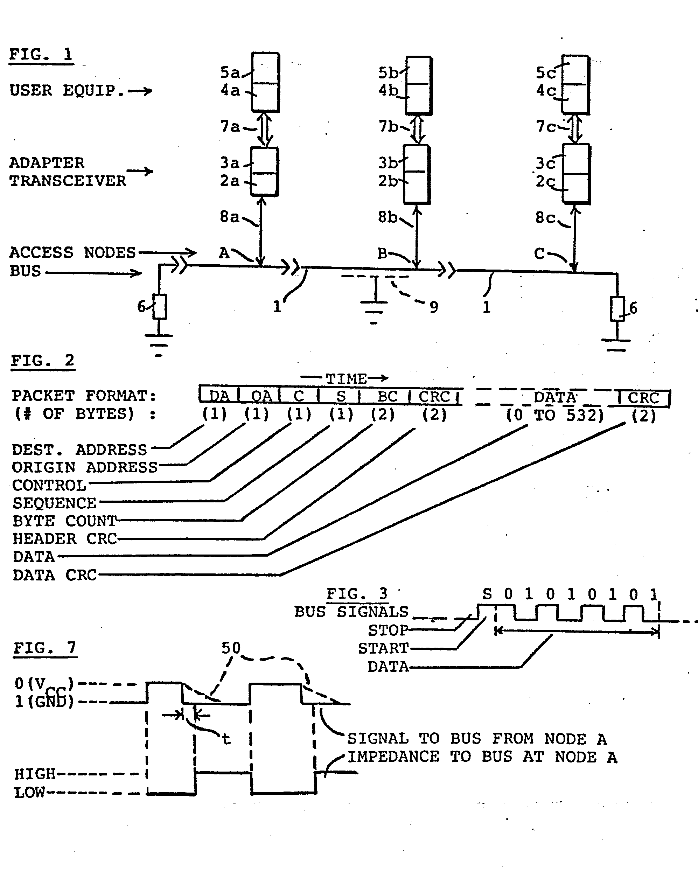

Figure 1 illustrates an environmental multiple access data communication system in which the present invention may be advantageously employed. Bus 1 is linked at "access nodes" A, B, C, etc., to multiple transceivers 2a, 2b, 2c, etc. Each transceiver couples through a respective adapter --3a, 3b, 3c, etc.-- to respective user equipment comprising a general purpose computer --4a, 4b, 4c, etc.-- and peripheral attachments to the latter, indicated at 5a, 5b, 5c, etc. Terminating impedances 6 couple ends of the bus to ground reference potential as shown. Bit-parallel byte-serial interfaces 7a, 7b, 7c, etc., link respective adapter and user systems, and bit serial interfaces 8a, 8b, 8c, etc. link respective transceivers to the bus 1. Distributed capacitive coupling to ground, at each bus access node, is suggested at 9 (the effect of this capacitance and its relation to the present invention are discussed later).

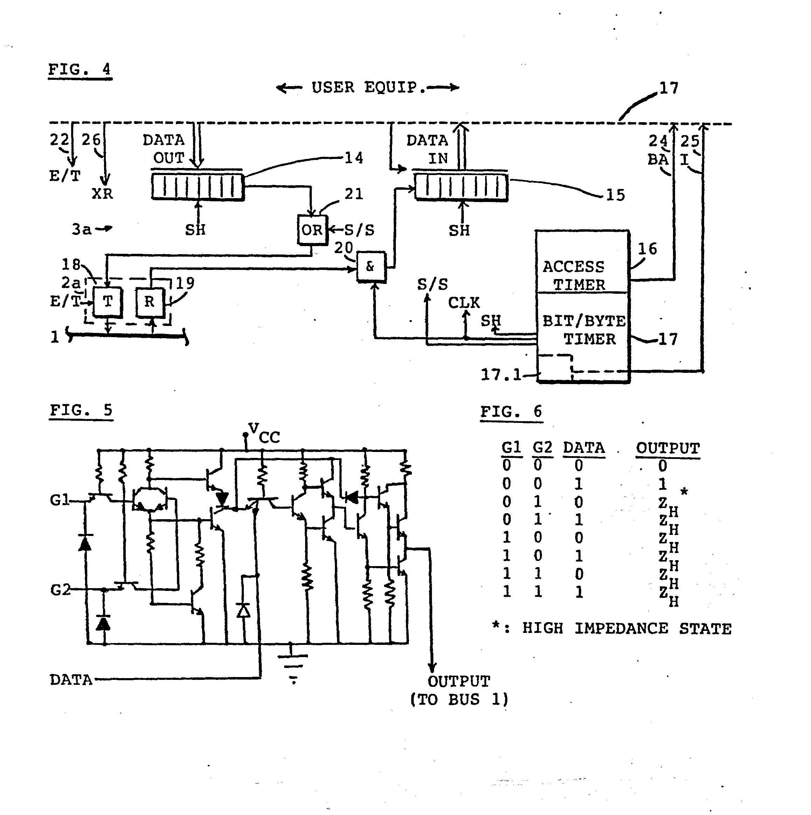

Information packet and bit signalling formats used on bus 1 are suggested, respectively, in Figures 3 and 4. Information is transferred between access nodes in variable length packets (also termed "frames") suggested in Figure 3. Each packet contains an eight-byte header section which is followed optionally by a data section varying in length from 0 to 532 bytes. The header section contains two address bytes DA and OA, a control byte C, a sequence verification byte S, a two-byte count field and a two-byte "header CRC" (cyclic redundancy check) factor.

The header bytes DA and OA, respectively, indicate the destination and origin access nodes of the packet. The control byte C indicates the packet function and distinguishes between packets which do and do not contain data. The sequence verification byte S is used relative to a series of common origin packets containing related data verifying that such packets are received in the sequence of their origination.

The count field indicates lengths of data portions in packets which contain data, and must have a value of 0 when the packet does not contain data. The "header CRC" is used for verifying correct reception of the header. Packets which contain data end with a two-byte data CRC which is used for verifying correct reception of the respective data.

Figure 3 indicates the byte signalling format used on the bus 1. Each byte of information (header, header CRC, data or data CRC) consists of eight information (data) bit signals preceded by a start bit signal and followed by a stop bit signal. The stop and start signals have complementary levels, and the transition between consecutive start and stop bits provides a time reference at receiving nodes for synchronizing receivers and enabling them to sample the (eight) following information bits at correct times. Stop bits and "1" information bits are represented by low (ground) voltage levels on the bus. Start bits and "0" information bits are represented by high (positive) voltage levels on the bus.

Figure 4 illustrates the organization of access node adapter 3a relative to the respective transceiver 2a. Since the adapter and transceiver equipments at all access nodes of the present system are generally identical, the following description will pertain to all access nodes. The adapter comprises an output buffer register 14, an input buffer register 15, bus access timer circuits 16 and bit/byte timing circuits 17.

Buffer 14 is a shift register which couples data from the user equipment interface 18 to the transmitting section 19 of transceiver 2a. Data is entered into the buffer in bit-parallel byte-serial form, under control of user gating signals applied at 14.1, and shifted bit serially out to the bus 1 via OR-circuit 14.2 and transmitter 19. Timing circuits 17 insert stop and start bits between consecutive bytes via line 17.1.

Buffer 15 performs a reverse signal to parallel conversion on the information portions of bytes in transit from the receiving section 20 of transceiver 2a to the user equipment (the stop and start elements, as noted previously, are used only for synchronizing the information bit reception timing and otherwise ignored). During input (receiving) operations, timing circuits 17 provide bit clocking signals CLK which operate through AND gate 21 to sample the information bit portions of each arriving byte into buffer 15. Circuits 17 also supply shift signals SH to buffers 14 and 15 for their respective shifting operations.

When a byte has been either loaded into register 15 or unloaded from register 14, circuits 17 signal a ready condition (RDY) at interface 18, via line 24, causing the user equipment to receive or issue a byte. Transfers to the user are controlled by user gating signals applied at 15.1.

Transmission operation is supervised by the user computer via transmission enabling control signal E/T presented at 23. E/T is applied to the sending section 19 of the transceiver.

Access timing circuits 16 cooperate with transition detecting circuits 17.2 in timer 17 to determine the state of the bus. If the bus is at the idle level (the level associated with stop signal transfer) for a predetermined interval longer than the time allotted for byte transfer, circuits 16 present a Bus Available indication BA to the user equipment via line 25. If BA is active and the user equipment is ready to send a packet, E/T is turned on and the transmission is immediately started. When the bus undergoes a transition from idle to active condition (i.e. from stop to start), timer 16 is reset and BA is deactivated if it was previously active. When BA is active and a bus transition is detected by circuits 17.2, the adapter effectively recognizes this is as indicating the start of a remote packet transfer on the bus, and presents an interruption signal I to the user processor via line 26. The user processor then interrupts its current processing task, examines the leading destination address byte transferred to it via buffer 15, and selectively controls reception of the full packet from the bus if the packet is approximately addressed.

Access timer is also resettable by external reset signals XR transferrable from the user computer via line 27.

The operation of the foregoing environment system is fully described in co-pending European patent application No............. For purposes of understanding the present invention it is sufficient to note the following aspects of these operations. The byte transfer intervals on the bus are tailored to operating characteristics of the user computers, so that the user computers can be shared for performing functions related in real time to each byte transfer in time coordination with the transfer action at the bus interface; e.g. calculation of a running check residue, updating of byte storage addresses, etc.

Due to propagation delays between nodes, it is possible for several nodes to detect a bus available condition at the same time and begin respective packet transmissions simultaneously, thereby producing an interference or collision condition. While sending the first two bytes, DA and OA, the user equipment at each access node monitors the bus receptively fr collision (compare sent and received bytes for identity). When a collision is detected, the affected nodes immediately terminate (abort) their respective transmissions and reschedule them. The subject invention concerns the technique used presently for bit signalling and its effect on the detectability of collisions.

In accordance with the present invention, the transmitting section 19 of each subject transceiver is conditioned to present a high impedance relative to the bus during a major portion of each "1" bit transmission interval. This is done so that local origin bit transmissions do not overpower or obscure potentially colliding bit signals originated at remote access nodes (the latter being more or less attenuated depending on the lengths of their transfer paths on the bus). These operations and their effects in relation to the detectability of collisions are described next with reference to Figures 5-10.

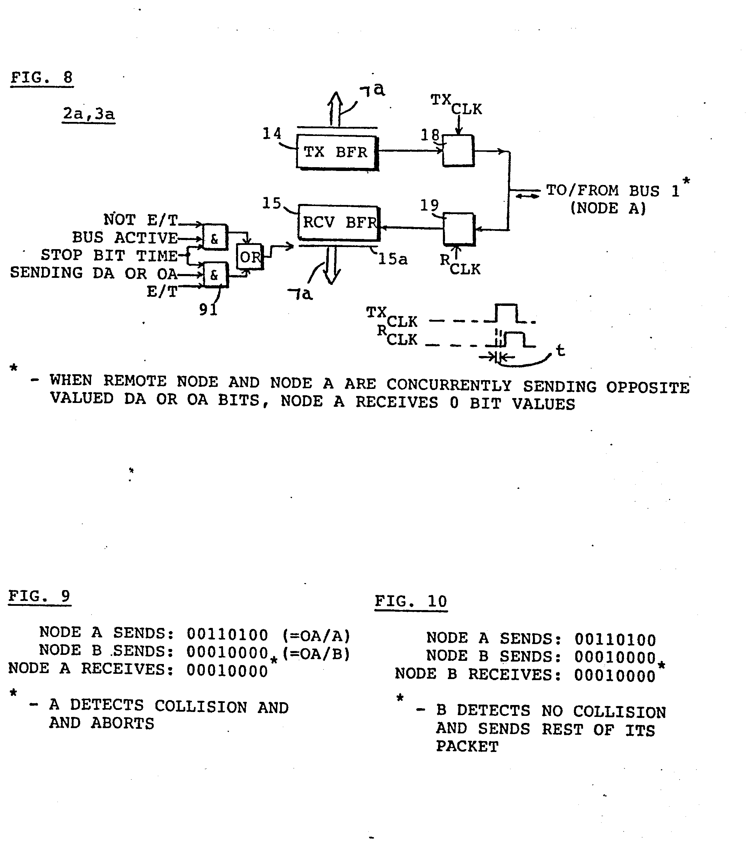

Figure 5 is a schematic of a three-state driver circuit used in the present transmitting section 19, and Figure 6 is a truth table indicating states of operation of that circuit. Figure 7 diagrams the operations of the same circuit during specific bit transfers to the bus. Figure 8 diagrams operations of the respective receiver, adapter and user system while the circuit of Figure 5 is being operated to transfer the first two bytes of a locally originated packer (bytes DA and OA, Figure 2) to the bus. Figure 9 illustrates a specific bus interference condition between a local transmitter and a remote transmitter which would cause the local user computer to sense a collision. Figure 10 illustrates another specific bus interference condition which would be transparent only to the local user system and not affect the reception integrity of the packet locally being transmitted, but appears as a collision to user systems at all remote interfering nodes.

The subject three-state driver circuit (Figure 5) is connected between positive supply voltage $V_{CC}$ and ground reference potential. It receives data and start-stop inputs (from OR circuits 14.2, figure 2) at 30, and control inputs G1 and G2 at 31 and 32, respectively. Its output at 33 passes to the bus. As shown in Figure 6, the circuit presents a high impedance Z/H to the bus when either of its control inputs is at a logical 1 level, and actively transfers a high/$V_{CC}$ or low/ground voltage condition functionally related to its data input when both G1 and G2 are at logical 0 levels (recall from Figure 3 that the high voltage condition is transferred to represent 0 data and start bits, and the low voltage condition is used to represent 1 data and stop bits).

Figure 7 shows that during the output transfer of either a 1 data bit or a stop bit, the subject circuit is operated initially for a brief period of time t to actively transfer a 1 output voltage level (i.e. by conditioning G1 and G2 jointly to 0 levels for that period), and subsequently for the remainder of the bit transfer period in the high impedance (isolated) state. The brief period of active signal transfer is sufficient to permit the bus to quickly discharge charges previously accumulated at the local site of connection (site A) -- compared to the passive discharge time 50 -- and quickly reach the desired ground voltage level, assuming no interference by a remote sender. However, it is also sufficiently short to preclude damage to the driver circuits by an interfering signal on the bus (applying undesired back currents).

Figure 7 also shows that during transfer of a 0 data bit or start bit to the bus, the driver circuit is operated to actively couple a $V_{CC}$ level to the bus. It should be noted that the rate of passive decay of charges accumulated on the bus (through the bus and its distributed capacitance), when all access node drivers are in the isolated state, is much slower than the rate associated with active charging or discharging through the driver circuits. Hence, the bus level established during the brief period of active coupling within each bit transfer period does not vary substantially during the remainder of the transfer period.

Figure 8 shows that while the adapter at an access node is sending the first two bytes of a packet to the bus (i.e. the destination and origin address bytes DA and OA, Figure 2), its receiver samples the bus level under control of its receive clock ($R_{CLK}$), and shifts the bits representing those levels into its receiving byte buffer 15. Bytes accumulated in buffer 15 are passed to the local user computer by the action of AND circuit 91 and gate bank 15a. The user computer compares the received bytes to copies of the transmitted bytes which it has saved, and declares a collision if they do not match. This function is performed by the computer before it transfers the next outgoing byte (to shift buffer 14, Figure 4). If a collision is declared, the outgoing transfer is immediately terminated (aborted) and scheduled for deferred repetition. If a collision is not declared, the outgoing byte transfer process is continued, and if the second byte of the local origin packet has been sent, the local receiver and collision monitoring function may be disabled.

Figure 8 notes that during the period of collision monitoring (while the first two bytes of the local packet are being sent), the local system (node A adaptor) reacts differently to the presence of interfering bit transfer conditions on the bus. When the local system at the A access site is sending a 0 bit and a remote system is sending a 1 bit, the local receiver will transfer a 0 bit level (to buffer 15, Figure 4) when its bit sampling function is enabled. However, if the local system is sending a 1 bit and a remote system is sending a 0, the local receiver will sample a 0. Consequently, the bit information acquired by the local receiver will differ from the corresponding outgoing bit only when the outgoing bit is a 1 and a remote system is sending a 0.

The cause of this disparity in bus bit monitoring, for the different interfering conditions just described, should be apparent. When the local system sends a 0 and a remote system sends a 1, the local driver initially couples $V_{CC}$ to the bus through a resistive local path while the remote driver is coupling the bus actively to ground through its remote conductive path (see Figure 5). The resulting effect on the bus at the local access site is to charge the bus quickly to a positive level (through distributed capacitance), while the competing drivers are active, and leave it at that level when the drivers become isolated. However, when the local system sends a 1 and the remote system a 0, the local driver initially couples the bus to ground through its internal conductive path while the remote driver is charging the bus to a positive level through its internal resistive path (again, see Figure 5). The local effect is to clamp the bus to ground potential initially, but then the bus charges quickly to a positive level which it sustains after the local driver goes into the high impedance state. The level is sufficient to be sampled as a 0 when the sampling function of the local receiver is next enabled.

In the present system, each access node has a unique address different from all other nodes, and the byte representing that address must contain at least one 1 bit. Furthermore, the byte transfer period presently employed is long by comparison to the maximal propagation delay between access nodes. Consequently, a high likelihood exists that the effects of interference would be manifest at all nodes during the transfer of the second packet byte (i.e. the origin address function OA), and this likelihood is strengthened by the extension of the collision monitoring function to span the transfers of both the first and second bytes of each packet.

Since the local receivers are effectively insensitive to bus interference when the bit locally being output is a 0, it is possible for interference to occur without being perceived locally as a collision condition. Figures 9 and 10, respectively, illustrate exemplary pairs of local and remote OA byte value transmissions which would and would not give rise to local declarations of collision. From these examples, it should be appreciated that when interference is present on the bus but not locally perceived (at the A access site) as a collision (Figure 10), the same conditions would cause the receivers at the remote sending sites to detect collision (since they would be sending 1's interference with 0's from the A site).

However, it also may be appreciated that in each circumstance of this kind, the 0 bits in the local origin DA and OA byte transfers (from the A site) would produce 0 levels on the bus regardless of any contemporary interferences, and therefore be perceived at all node receivers as 0 bits; and the 1 bits sent from a node which does not perceive collision must either enter the bus free of interference or in interference only with 1 bits being sent by other nodes (i.e. in interference but not in collision conflict). Therefore, in each instance where two or more access nodes attempt to access the bus simultaneously, and at least one of them does not perceive a collision, the first two bytes sent by the latter node will be seen in their original form at all other nodes. Furthermore, there is very little likelihood, in this type of situation just mentioned, of not having collision detected at more than one node. Accordingly, in each such circumstance, there will generally be only one node failing to abort its transfer and the first two bytes sent by that node will be receivable in their original form.

While the invention has been particularly described with reference to the illustrated preferred embodiment, it will be understood that various changes in form and detail may be made thereto without departing from the spirit and scope thereof.

CLAIMS

1.  An apparatus for facilitating collision detection in a
    multiple access data communication system, in which
    plural transceiver stations may simultaneously begin to
    transmit baseband signals on a bus , monitor the bus
    for collision, and abort and deferrably reschedule
    transmissions upon detecting collision, said apparatus
    being characterized in that it comprises :

    three-state   driver   circuit   means   in   the
    transmitting   section   of   a   said   station's
    transceiver   for   passing   information   bit   signals
    from the station to the bus;

    means for conditioning said driver circuit means
    to distinct first, second and third states to
    effect transfers of information bit signals from
    the station to the bus;

    said conditioning means actively setting said
    driver circuit means steadily to said first state
    for actively transferring a signal at a first
    amplitude level to said bus, said signal having a
    first logical bit significance;

    said conditioning means setting said driver
    circuit means transiently to said second state to
    actively transfer to said bus a second signal
    level, different from said first level, when
    initiating transmission from the station of bit
    information having second logical significance
    opposite to said first logical significance, after
    prior transmission of bit information having said
    first logical significance; said bus charging to
    and remaining at said second level when no other
    station driver is simultaneously operating in said
    first state; and

said conditioning means setting said driver circuit means to said third state for the remaining transmission of said bit information having said second logical significance; said driver circuit presenting a high impedance effectively isolating it from said bus while in said third state.

2. Apparatus in accordance with claim 1, characterized in that it comprises :

bit sampling means in the receiver section of said station transceiver for receivably sampling the signal level on the bus at a predetermined time within each interval allotted for transmitting a bit signal from the respective station to the bus; the time of said level sampling always trailing times at which the respective driver means is conditioned to said second state by a predetermined time increment allowing for active steeling of said bus to said second level;

means for storing information bit functions sampled by said bit sampling means;

means associated with said storing means for determining from the information stored therein if a collision has occurred on said bus, and

means responsive to said collision determining means for controlling the transmitting section of the station to continue or discontinue a transmission operation conditional on said determination.

3. Apparatus in accordance with claim 2 characterized in that said stations comprise user devices linked via transceivers with said bus for exchanging byte

17

0132645

information with said bus, each user device containing a general purpose digital computer which is programmably adapted to act as said collision determining means in addition to its primary task responsibilities concerned with processing data within said user device.

4.   A method of facilitating collision detection by contending transceivers in a multiple access data communication system, in which plural transceivers having tapped connections to a common bus may simultaneously attempt to transmit packets of digital information in a bit-serial baseband form, each packet comprising multiple bit signals representing logical 1 and 0 digital information, said method being characterized in that it comprises, at each site of connection between a transceiver and the bus :

isolating the transmitting section of the transceiver from the bus during intervals locally allotted to transfers of signal levels to the bus representing one particular logical information bit value;

actively coupling the same section to the bus during intervals allotted to transfers of the opposite logical bit signal level to the bus;

receivably sampling the bit signal level on said bus at approximately the midpoint in time of each interval locally allotted to transferring a bit from the transceiver to the bus; and

timing transitions of said transmitting section from the actively coupled state to the isolated state to occur later than corresponding transitions in the logical bit information presented to the input of the transmitting section but earlier than the next time allotted for receivably sampling the bus level, whereby charge conditions accumulated at said connection site ban be actively removed through the transmitting section before that section is placed in said isolated state.

5.  A method of facilitating collision detection in accordance with Claim 4, in a system in which each transceiver interfaces between the bus and a user device which contains a general purpose digital computer, characterized in that it comprises at each said connection site :

transmitting said information signals in a bit-serial baseband asynchronous form in which each group of bit signals forming a byte is preceded by a pair of stop and start signals whose transition provides a time reference for reception of the respective bit group at other transceiver connection sites;

tailoring times allotted to said stop signals to specific operating characteristics of the computer in the respective user device;

storing bit level samples acquired in said receivably sampling step to accumulate samples acquired during transfer of an outgoing byte;

transferring said stored samples to said respective computer during the stop signalling interval immediately following the transfer of said outgoing byte; and

during the same stop interval, comparing said transferred samples to byte information previously stored in said computer and determining thereby if

19

0132645

a collision occurred on said bus during the previous interval of outgoing byte transfer.

FIG. 1

USER EQUIP. →

ADAPTER
TRANSCEIVER →

ACCESS NODES →
BUS →

FIG. 2

PACKET FORMAT:
(# OF BYTES) :

| DA | OA | C | S | BC | CRC | | DATA | CRC |
|----|----|---|---|----|-----|--|------|-----|
| (1) | (1) | (1) | (1) | (2) | (2) | | (0 TO 532) | (2) |

←—TIME—→

DEST. ADDRESS
ORIGIN ADDRESS
CONTROL
SEQUENCE
BYTE COUNT
HEADER CRC
DATA
DATA CRC

FIG. 3
BUS SIGNALS          S 0 1 0 1 0 1 0 1
        STOP
        START
        DATA

FIG. 7

0 (V_CC)
1 (GND)

t

HIGH
LOW

SIGNAL TO BUS FROM NODE A
IMPEDANCE TO BUS AT NODE A

50

FIG. 4

← USER EQUIP. →

FIG. 5

FIG. 6

| G1 | G2 | DATA | OUTPUT |
|----|----|------|--------|
| 0 | 0 | 0 | 0 |
| 0 | 0 | 1 | 1 |
| 0 | 1 | 0 | $Z_H$ * |
| 0 | 1 | 1 | $Z_H$ |
| 1 | 0 | 0 | $Z_H$ |
| 1 | 0 | 1 | $Z_H$ |
| 1 | 1 | 0 | $Z_H$ |
| 1 | 1 | 1 | $Z_H$ |

*: HIGH IMPEDANCE STATE

FIG. 8

2a,3a

*  - WHEN REMOTE NODE AND NODE A ARE CONCURRENTLY SENDING OPPOSITE
     VALUED DA OR OA BITS, NODE A RECEIVES 0 BIT VALUES

FIG. 9

    NODE A SENDS: 00110100 (=OA/A)
    NODE B SENDS: 00010000 (=OA/B)
NODE A RECEIVES: 00010000*

*  - A DETECTS COLLISION AND
     AND ABORTS

FIG. 10

    NODE A SENDS: 00110100
    NODE B SENDS: 00010000
NODE B RECEIVES: 00010000*

*  - B DETECTS NO COLLISION
     AND SENDS REST OF ITS
     PACKET